# EUROPÄISCHE PATENTSCHRIFT

(11) **EP 0 569 361 B1**
(45) Veröffentlichungstag und Bekanntmachung des Hinweises auf die Patenterteilung: **28.02.1996**
(21) Anmeldenummer: 91920237.4
(22) Anmeldetag: 28.11.1991
(51) Int. Cl.: B24B 23/02, B25F 5/02, B27B 17/00, B24B 55/00

(54) **HANDWERKZEUGMASCHINE**
HAND TOOL
OUTILLAGE A MAIN

(30) Priorität: 29.01.1991 DE 4102482
(43) Veröffentlichungstag der Anmeldung: 18.11.1993
(73) Patentinhaber: ROBERT BOSCH GMBH, D-70442 Stuttgart (DE)
(72) Erfinder: EICHER, Bernhard, D-7024 Filderstadt 4 (DE)
(86) Internationale Anmeldenummer: DE9100930
(87) Internationale Veröffentlichungsnummer: WO9212824

(56) Entgegenhaltungen:
- DE-A- 4 021 277

## Beschreibung

Die Erfindung geht aus von einer Handwerkzeugmaschine, insbesondere einer handgeführten Winkelschleifmaschine, der im Oberbegriff des Anspruchs 1 definierten Gattung.

Handwerkzeugmaschinen, insbesondere handgeführte Winkelschleifmaschinen, sind heute ausschließlich mit einem Ein- und Ausschalter für den elektrischen Antrieb ausgerüstet, der über die Schalterleiste betätigt wird. Die Schalterleiste liegt an der Handgriffunterseite und wird beim Umfassen des Handgriffes von mindestens einem Finger betätigt und während des Arbeitens mit der Maschine betätigt gehalten. Die ergonomische Gestaltung des Handgriffes, wie Querschnittsform und Neigungswinkel zur Geräteachse, ist für eine einzige Arbeitsstellung der Maschine optimiert.

Einige Handwerkzeugmaschinen werden in mehr als einer Arbeitsstellung für verschiedene Arbeitsgänge verwendet. Eine Winkelschleifmaschine z.B. wird neben dem Schleifen oder Schrubben auch für Trennarbeiten, z.B. zum Trennen von Steinplatten, verwendet. Die vorstehend angesprochene optimale Arbeitsstellung ist üblicherweise für die Arbeitsstellung Schrubben gegeben, in welcher die Schleifscheibe nach unten weist, also in etwa parallel zur Schalterleiste liegt. Bei Trennarbeiten hingegen wird die Winkelschleifmaschine um 90° um ihre Längsachse nach links oder rechts gedreht, so daß die Trennscheibe etwa senkrecht zum Werkstück steht. Durch diese Drehung kommt der Handgriff zusammen mit der Schalterleiste in eine ungünstige Lage zur umfassenden Hand. Wird die Maschine nach links gedreht und der Handgriff mit der rechten Hand umfaßt, kommt die Schalterleiste im Handballen zu liegen. Wird die Maschine nach rechts gedreht und mit der rechten Hand gehalten, kann die Schalterleiste nur noch mit dem Daumen betätigt und gehalten werden. In beiden Fällen ist ein sicheres und ermüdungsfreies Halten der Schalterleiste nicht möglich. Außerdem kann im Gefahrensfall im Hinblick auf die Lage von Einschaltsperre und Einschaltverriegelung nicht schnell genug reagiert und abgeschaltet werden.

Um diesen Nachteil zu umgehen, ist bereits bei einer Handwerkzeugmaschine der eingangs genannten Art der Gehäuseteil Handgriff oder der Gehäuseteil Getriebekopf am Motorgehäuse drehbar gehalten und kann in definierten Drehstellungen für eine jeweils ergonomisch günstige Arbeitshaltung mittels einer Fixiervorrichtung festgelegt werden.

Bei einer bereits vorgeschlagenen Handwerkzeugmaschine dieser Art (siehe EP-A-0539382 welches zum Stand der Technik gemäß Artikel 54(3) EPÜ gehort) wird die Drehbarkeit des Handgriffs bzw. des Getriebekopfs dadurch erreicht, daß das schalenförmige Gehäuse des drehbaren Gehäuseteils mit einem radial vorspringenden Bund versehen ist, der in eine Umlaufnut am Motorgehäuse eingreift. Die manuell betätigbare Fixiervorrichtung weist eine Verriegelungsvorrichtung zur Verriegelung des drehbaren Gehäuseteils am Motorgehäuse und eine Klemmvorrichtung zum Verspannen des drehbaren Gehäuseteils am Motorgehäuse auf. Die Verriegelungsvorrichtung weist dabei mindestens zwei im Motorgehäuse um einen Drehwinkel zueinander versetzt angeordnete Verriegelungsnuten und einen im Schalengehäuse des drehbaren Gehäuseteils schwenkbaren Verriegelungsnocken auf, der formschlüssig in jeweils eine der Verriegelungsnuten einzugreifen vermag. Die Klemmvorrichtung weist eine quer zu einem Längsschlitz im vorspringenden Bund des Schalengehäuses sich erstreckende Spannschraube auf, die mittels eines Spannhebels in einem Gewinde verschraubbar ist und die die beidseitig des Längsschlitzes ausgebildeten Gehäusebereiche des Schalengehäuses unter Reduzierung der Breite des Längsschlitzes aufeinanderzu zu bewegen vermag. Die zur Verriegelungsvorrichtung zusätzliche Klemmvorrichtung ist deshalb erforderlich, damit einerseits eine leichte Drehbeweglichkeit des drehbaren Gehäuseteils am Motorgehäuse sichergestellt ist und andererseits bei Arbeiten mit der Handwerkzeugmaschine in den unterschiedlichen Relativstellungen von Motorgehäuse und drehbarem Gehäuseteil immer eine steife Verbindung dieser Gehäuseteile gegeben ist.

### Vorteile der Erfindung

Die erfindungsgemäße Handwerkzeugmaschine mit den Merkmalen des Anspruchs 1 hat demgegenüber den Vorteil einer einfachen konstruktiven Ausbildung der Fixiervorrichtung in Verbindung mit der drehbaren Lagerung des drehenden Gehäuseteils am Motorgehäuse. Die Festlegung des drehbaren Gehäuseteils in der vorbestimmten Arbeitsposition erfolgt durch Formschluß zwischen Verriegelungstasche und Verriegelungsnocken, wobei durch den mindestens einen Arretier- oder Verriegelungsstift zugleich eine axiale Verspannung des drehbaren Gehäuseteils in der Ringnut erzielt werden kann.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Bei einer bevorzugten Ausführungsform der Erfindung ist der Lagerstutzen am Ende eines mit dem Motorgehäuse vorzugsweise einstückigen Zentrierkegels angeordnet, auf den sich der drehbare Gehäuseteil bei seiner Axialverschiebung zwecks Herstellung des Verriegelungsformschlusses mit einem entsprechend ausgebildeten zweiten Zentrierkegel aufsetzt. Dadurch ist sichergestellt, daß bei der Verriegelung des drehbaren Gehäuseteils zugleich dessen exakte Ausrichtung zum Motorgehäuse erfolgt.

Gemäß einer weiteren Ausführungsform der Erfindung sind vier um jeweils 90° zueinander versetzte Verriegelungstaschen, vier um jeweils 90° zueinander versetzte Verriegelungsnocken und zwei Verriegelungsstifte vorhanden, die am Lagerstutzen diametral gegenüberliegend quer zur Längsachse verlaufen, tangential die Ringnut durchdringen und am drehbaren Gehäuseteil seitlich vorstehen, wobei der Durchmesser der Verriegelungsstifte wenig kleiner bemessen ist als die Nutbreite der Ringnut. Jeder Mitnehmerstift trägt eine radiale Ausnehmung, deren radiale Tiefe größer ist als die axiale Abmessung der Verriegelungsnocken und deren Abmessung in ihrer Längsrichtung größer ist als die Abmessung der Verriegelungsnocken in Umfangsrichtung. Jede Ausnehmung ist so angeordnet, daß sie in der Entriegelungsstellung der Verriegelungsstifte durch Verdrehung des drehbaren Gehäuseteils jeweils in eine einer Verriegelungstasche gegenüberstehende Position bringbar und in einer Verriegelungsstellung der Verriegelungsstifte von der Verriegelungstasche entfernt ist. Eine solche Ausführung der Handwerkzeugmaschine ist insbesondere für Winkelschleifmaschinen von Vorteil und ermöglicht, die Schleifscheibe aus einer Schrubbstellung, in welcher die Schleifscheibe in etwa parallel zur Schalterleiste am Handgriff liegt, durch Drehung des Motorgehäuses in beide Richtungen um 90° in die sog. Trennstellung umzustellen, in welcher die Schleifscheibe rechtwinklig zur Schalterleiste steht. In jeder der drei Verriegelungsstellungen liegen vier Verriegelungsnocken in vier Verriegelungstaschen ein, wobei jeweils zwei Verriegelungsnocken durch die beiden Verriegelungsstifte verriegelt werden. Die Entriegelung erfolgt dadurch, daß die an den Verriegelungsstiften angebrachten Ausnehmungen in Deckung mit den Verriegelungsnocken gebracht werden. In dieser Stellung lassen sich die Verriegelungsnocken durch geringe Axialverschiebung des drehenden Gehäuseteils aus den Verriegelungstaschen herausziehen und das Gehäuseteil ist zur Drehbewegung freigegeben. Zur erneuten Verriegelung des Gehäuseteils werden die Ausnehmungen durch Drehung der Verriegelungsstifte oder durch Verschiebung in ihrer Längsrichtung aus dem Bereich der Verriegelungstaschen entfernt, und die im Durchmesser etwa der Ringnutbreite entsprechenden Verriegelungsstifte blockieren die Verriegelungsnocken in den Verriegelungstaschen.

### Zeichnung

Die Erfindung ist anhand eines in der Zeichnung dargestellten Ausführungsbeispiels in der nachfolgenden Beschreibung näher erläutert. Es zeigen:
- Fig. 1: eine Seitenansicht einer handgeführten elektrischen Winkelschleifmaschine,
- Fig. 2: einen Schnitt längs der Linie II-II in Fig. 1,
- Fig. 3: ausschnittweise einen Schnitt längs der Linie III-III in Fig. 2.

### Beschreibung des Ausführungsbeispiels

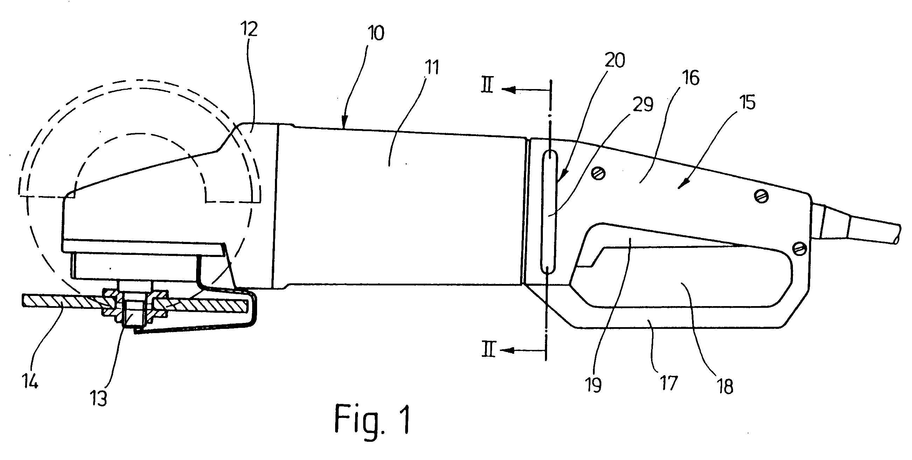

Die in Fig. 1 in Seitenansicht zu sehende handgeführte elektrische Winkelschleifmaschine als Ausführungsbeispiel für eine allgemeine elektrische Handwerkzeugmaschine weist ein Maschinengehäuse 10 auf, das in ein Motorgehäuse 11, in einen an der einen Gehäusestirnseite des Motorgehäuses 11 angeordneten Getriebekopf 12 mit vorstehender Antriebsspindel 13 für eine Schleifscheibe 14 und in einen an der anderen Gehäusestirnseite des Motorgehäuses 11 angeordneten Handgriff 15 unterteilt ist, der am Motorgehäuse 11 um dessen Längsachse über einen vorgegebenen Drehbereich drehbar ausgebildet ist. Der aus zwei zwei Gehäuseschalen 151,152 zusammengesetzte Handgriff 15 besteht aus einem Stielgriff 16, der beim Arbeiten mit der Winkelschleifmaschine von der Hand umschlossen wird, und aus einem daran einstückig angesetzten Bügel 17, der auf der Unterseite den Stielgriff 16 unter Belassung einer Durchgrifföffnung 18 überzieht und beim Arbeiten mit der Winkelschleifmaschine die um den Stielgriff 16 gelegten Finger nach unten schützend abdeckt. An der dem Bügel 17 zugekehrten Unterseite des Stielgriffs 16 ragt eine Schalterleiste 19 in die Durchgriffsöffnung 18 hinein, die einen Ein- und Ausschalter für einen elektrischen Antriebsmotor betätigt, der im Motorgehäuse 11 untergebracht ist. Der Getriebekopf 12 ist fest mit dem Motorgehäuse 11 verbunden, während der am Motorgehäuse 11 drehbare Handgriff 15 mittels einer Fixiervorrichtung 20 am Motorgehäuse 11 in drei unterschiedlichen Drehstellungen festgelegt werden kann. In der in Fig. 1 dargestellten Relativlage von Motorgehäuse 11 und Handgriff 15 zueinander wird die Winkelschleifmaschine zum sog. Schrubben verwendet. In dieser Relativlage liegt die Schleifscheibe 14 in etwa parallel zur Schalterleiste 19. Aus dieser Schrubbstellung kann durch Drehen des Handgriffes 15 bzw. des Motorgehäuses 11 um 90° nach links oder rechts die Winkelschleifmaschine für den Arbeitsgang "Trennen" vorbereitet werden. Bei dieser Arbeitstellung der Winkelschleifmaschine behält in Fig. 1 der Handgriff 15 seine Lage bei und das Motorgehäuse 11 samt Getriebekopf 12 ist um 90° verdreht, so daß die Schleifscheibe 14 die in Fig. 1 strichliniert eingezeichnete Lage einnimmt, bei welcher sie etwa rechtwinklig zur Schalterleiste 19 ausgerichtet ist.

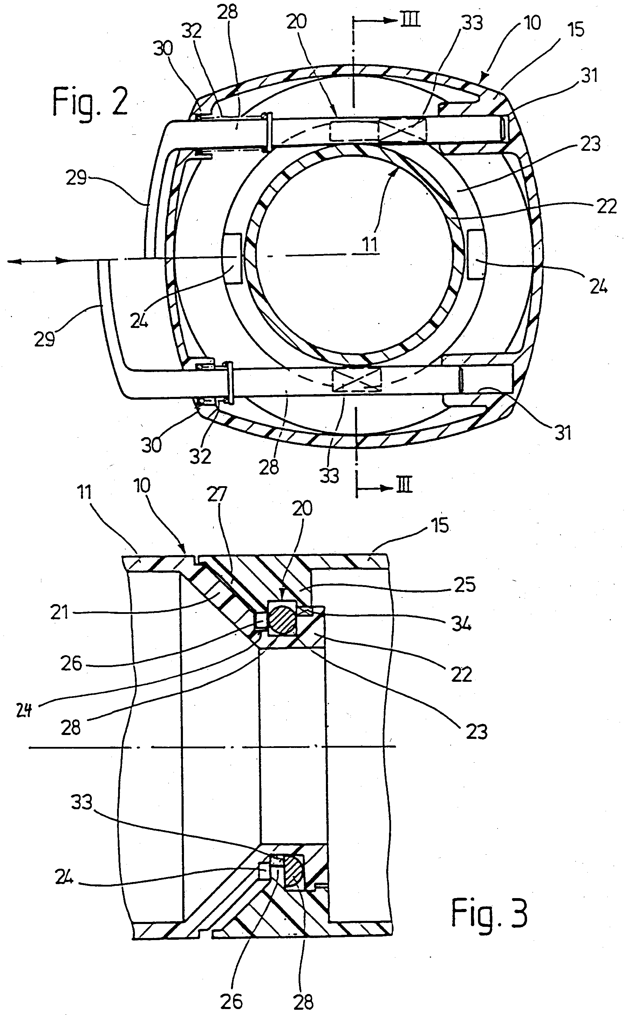

Einzelheiten der Fixiervorrichtung 20 sowie der drehbeweglichen Halterung des Handgriffs 15 am Motorgehäuse 11 sind in Fig. 2 und Fig. 3 dargestellt. An dem Motorgehäuse 11 ist am Ende eines Zentrierkegels 21 ein hohlzylindrischer Lagerstutzen 22 einstückig angeformt, der von dem schalenartigen Gehäuseteil des Handgriffs 15 übergriffen wird. Am Lagerstutzen 22 ist eine Ringnut 23 ausgebildet, in welcher vier jeweils um 90° Drehwinkel zueinander versetzte Verriegelungstaschen 24 eingebracht sind. Der Handgriff 15 sitzt mit einem Ringbund 25 drehend und axial verschieblich auf dem Lagerstutzen 22 und ragt mit insgesamt vier Verriegelungsnocken 26 in die Ringnut 23 hinein. Am Ende des Ringbundes 25 ist ein zweiter Zentrierkegel 27 entsprechend dem ersten Zentrierkegel 21 am Motorgehäuse 11 ausgeformt, der bei Aufsetzen auf den ersten Zentrierkegel 21 eine Zentrierung des Handgriffs 15 am Motorgehäuse 11 herbeiführt. Die Verriegelungsnocken 26 korrespondieren mit den Verriegelungstaschen 24, so daß sie ebenfalls um jeweils 90° Drehwinkel zueinander versetzt am Ringbund 23 angeordnet sind eine axiale Breite aufweisen, die etwa der axialen Tiefe der Verriegelungstaschen 24 entspricht, und mit einer tangentialen Breite ausgestattet sind, die in etwa der Breite der Verriegelungstaschen 24 in Umfangsrichtung entspricht. Damit ist sichergestellt, daß bei entsprechender Axialverschiebung des Handgriffs 15 die Verriegelungsnocken 26 formschlüssig in die Verriegelungstaschen 24 eindringen, so daß der Handgriff 15 damit undrehbar am Motorgehäuse 11 gehalten ist.

Neben den Verriegelungsnocken 26 und den Verriegelungstaschen 24 weist die Fixiervorrichtung 20 noch zwei Verriegelungsstifte 28 auf, die am Lagerstutzen 22 diametral gegenüberliegend quer zur Längsachse verlaufen, tangential die Ringnut 23 durchdringen und am Handgriff 15 seitlich vorstehen und dort über einen Bügel 29 starr miteinander verbunden sind, der zugleich als Griff für die Betätigung der Verriegelungsstifte 28 dient. Jeder Verriegelungsstift 28 ist in zwei Führungen 30,31, die am Schalengehäuse des Handgriffs 15 ausgebildet sind, axial verschieblich geführt und wird von einer Rückstellfeder 32 in einer Grundstellung gehalten, die der Verriegelungsstellung der Fixiervorrichtung 20 entspricht. Diese Stellung nimmt der in Fig. 2 obere Verriegelungsstift 28 ein, während der untere Verriegelungsstift 28 in seiner Betätigungsstellung dargestellt ist, welche bei zusammengedrückter Rückstellfeder 32 der Entriegelungsstellung der Fixiervorrichtung 20 entspricht. Der Durchmesser jedes Verriegelungsstiftes 28 ist wenig kleiner bemessen als die Nutbreite der Ringnut 23 im Lagerstutzen 22, so daß der Verriegelungsstift 28 einerseits die Ringnut 23 vollständig ausfüllt und andererseits klemmfrei durch die Ringnut 23 hindurchgeschoben werden kann. Jeder Verriegelungsstift 28 trägt eine radiale Ausnehmung 33, deren radiale Tiefe der axialen Breite eines Verriegelungsnockens 26 bzw. der axialen Tiefe einer Verriegelungstasche 24 entspricht und deren axiale Länge größer ist als die Abmessung der Verriegelungsnocken 26 in Umfangsrichtung. Die Aussparung 33 ist an jedem Verriegelungsstift 28 so angeordnet, daß sie in der Entriegelungsstellung des Verriegelungsstiftes 28 jeweils einer Verriegelungstasche 24 gegenübersteht (vergl. unteren Verriegelungsstift 28 in Fig. 2 und 3) und in der Verriegelungsstellung des Verriegelungsstiftes 28 von den Verriegelungstaschen 24 entfernt ist (vergl. oberen Verriegelungsstift 28 in Fig. 2 und 3).

Die Wirkungsweise der Fixiervorrichtung 20 ist wie folgt:
Die beiden über den Bügel 29 miteinander verbundenen Verriegelungsstifte 28 stellen einen Schieber dar, mit dem die Fixiervorrichtung 20 manuell betätigt wird. Zum Entriegeln ist dieser Schieber 28,29 in Pfeilrichtung in Fig. 2 nach links gegen die Kraft der Rückstellfeder 32 bis auf Blockanschlag der Rückstellfeder 32 herauszuziehen. Die beiden Verriegelungsstifte 28 nehmen dabei die in Fig. 2 und 3 unten gezeigte Stellung ein, in welcher die beiden Ausnehmungen 33 in den Verriegelungsstiften 28 den beiden diametral gegenüberliegenden Verriegelungstaschen 24 in Achsrichtung gegenüberstehen. Nunmehr können durch begrenzte Axialverschiebung des Handgriffs 15 die Verriegelungsnocken 26 aus den Verriegelungstaschen 24 herausgezogen werden, bis sie am Grund der Ausnehmungen 33 in den beiden Verriegelungsstiften 28 anstoßen. Der Formschluß zwischen den Verriegelungsnocken 26 und den Verriegelungstaschen 24 ist aufgehoben, und der Handgriff 15 kann um seine Längsachse verdreht werden, bis nach einer Drehung von 90° im Uhrzeigersinn oder entgegen Uhrzeigersinn ein Anschlag 34 diese Drehbewegung begrenzt. In dieser Stellung fluchten wiederum alle vier Verriegelungsnocken 26 mit den Verriegelungstaschen 24. Nunmehr wird der Handgriff 15 axial auf das Motorgehäuse 11 aufgeschoben und wird dabei über die beiden Zentrierkegel 21,27 zentriert. Gleichzeitig gleiten die Verriegelungsnocken 26 wieder in die Verriegelungstaschen 24 ein. Beim anschließenden Hineinschieben des Schiebers 28,29 werden die Ausnehmungen 33 zu den Verriegelungstaschen 24 versetzt und somit zwei der in die Verriegelungstaschen 24 eingerückten Verriegelungsnocken 26 durch die beiden Verriegelungsstifte 28 arretiert (oberer Verriegelungsstift 28 in Fig. 2 und 3).

Die Erfindung ist nicht auf das vorstehend beschriebene Ausführungsbeispiel beschränkt. So sind die beiden Verriegelungsstifte 28 in einer konstruktiven Variante nicht durch einen Bügel 29 miteinander verbunden, sondern einzeln in den Führungen 30,31 drehbar und in ihrer Längsrichtung unverschieblich gehalten. Die Rückstellfedern 32 entfallen. Die Ausnehmungen 33 sind in gleicher Form, jedoch mittig an den Verriegelungstiften 28 angeordnet, so daß sie den Verriegelungstaschen 24 axial gegenüberstehen. Durch eine Verdrehung der Verriegelungsstifte 28 um mindestens 90° werden die Ausnehmungen 33 von den Verriegelungstaschen 24 entfernt und der die Ringnut 23 ausfüllende Durchmesser der Verriegelungsstifte 28 arretiert die Verriegelungsnocken 26 in den Verriegelungstaschen 24.

In einer weiteren Abänderung der beschriebenen Winkelschleifmaschine kann der Handgriff 15 fest mit dem Motorgehäuse 11 verbunden und stattdessen der Getriebekopf 12 in der vorstehend beschriebenen Weise mit dem Motorgehäuse 11 drehbeweglich verbunden werden.

## Patentansprüche

1. Handwerkzeugmaschine, insbesondere handgeführte Winkelschleifmaschine, mit einem Maschinengehäuse (10), das in ein einen elektrischen Antrieb aufnehmendes Motorgehäuse (11), in einen an der einen Stirnseite des Motorgehäuses (11) angeordneten Getriebekopf (12) mit vorstehender Antriebsspindel (13) für ein Werkzeug (14) und in einen an der anderen Stirnseite des Motorgehäuses (11) angeordneten Handgriff (15) mit einer Schalterleiste (19) zum Ein- und Ausschalten des elektrischen Antriebs unterteilt ist, dadurch gekennzeichnet, daß entweder der Handgriff (15) oder der Getriebekopf (12) als drehbares Gehäuseteil (13) relativ zum Motorgehäuse (11) um dessen Längsachse drehbar ausgebildet ist, und daß die Handwerkzeugmaschine mit einer manuell betätigbaren Fixiervorrichtung (20) zum Festsetzen des drehbaren Gehäuseteils in mindestens zwei unterschiedlichen Drehstellungen ausgestattet ist, wobei, der drehbare Gehäuseteil auf einem am Motorgehäuse (11) angeformten Lagerstutzen (22) drehend und axial verschieblich gehalten ist und am Lagerstutzen (22) eine Ringnut (23) mit mindestens zwei um gleiche Drehwinkel zueinander versetzt angeordneten Verriegelungstaschen (24) vorgesehen ist und am drehbaren Gehäuseteil mindestens ein in die Ringnut (23) hineinragender Verriegelungsnocken (26) angeordnet ist, der so ausgebildet ist, daß er formschlüssig in jede der Verriegelungstaschen (24) axial einzugreifen vermag, und daß die Fixiervorrichtung (20) mindestens einen manuell betätigbaren Verriegelungsstift (28) aufweist, der einen durch Axial eingriff der Verriegelungsnocken (26) in die Verriegelungstaschen (24) bewirkten Formschluß zwischen dem drehbaren Gehäuseteil und dem Motorgehäuse (11) aufrechterhält, indem der Verriegelungsstift (28) die Verriegelungsnocken (26) in ihrer Eingriffstellung arretiert.

2. Maschine nach Anspruch 1, dadurch gekennzeichnet, daß der Lagerstutzen (22) am Ende eines Zentrierkegels (21) angeordnet ist, auf den sich der drehbare Gehäuseteil mit einem entsprechend ausgebildeten Zentrierkegel (27) bei seiner zwecks Formschlußherstellung vorgenommenen Axialverschiebung aufsetzt.

3. Maschine nach Anspruch 1 oder 2, dadurch gekennzeichnet, daß vier in Umfangsrichtung um jeweils 90° zueinander versetzte Verriegelungstaschen (24), vier in Umfangsrichtung um jeweils 90° zueinander versetzte Verriegelungsnocken (26) und zwei Verriegelungsstifte (28) vorhanden sind, daß die Verriegelungsstifte (28) am Lagerstutzen (22) diametral gegenüberliegend quer zu dessen Längsachse verlaufend, im drehbaren Gehäuseteil gehalten sind, tangential die Ringnut (23) durchdringen und am drehbaren Gehäuseteil seitlich vorstehen, daß der Durchmesser der Verriegelungsstifte (28) wenig kleiner bemessen ist als die Nutbreite der Ringnut (23), daß jeder Verriegelungsstift (28) eine radiale Ausnehmung (33) trägt, deren radiale Tiefe größer ist als die axiale Abmessung der Verriegelungsnocken (26) und deren Abmessung in ihrer Längsrichtung größer ist als die Abmessung der Verriegelungsnocken (26) in Umfangsrichtung, und daß die Ausnehmungen (33) in den Verriegelungsstiften (28) so angeordnet sind, daß sie in einer Entriegelungsstellung der Verriegelungsstifte (28) durch Verdrehung des drehbaren Gehäuseteils jeweils in eine einer Verriegelungstasche (24) axial gegenüberstehende Position bringbar und in einer Verriegelungsstellung der Verriegelungsstifte (28) von den Verriegelungstaschen (24) entfernt sind.

4. Maschine nach Anspruch 3, dadurch gekennzeichnet, daß die Verriegelungsstifte (28) im drehbaren Gehäuseteil undrehbar und axial verschieblich geführt sind und von einer Rückstellfeder (32) in der Verriegelungsstellung gehalten werden.

5. Maschine nach Anspruch 4, dadurch gekennzeichnet, daß die beiden Verriegelungsstifte (28) über einen außen am drehbaren Gehäuseteil mit Abstand von diesem verlaufenden Bügel (29) miteinander starr verbunden sind, der als Griff zur Betätigung der Verriegelungsstifte (28) dient.

6. Maschine nach Anspruch 3, dadurch gekennzeichnet, daß die Verriegelungsstifte (28) im drehbaren Gehäuseteil drehbeweglich und in ihrer Längsrichtung unverschieblich gehalten sind.

7. Maschine nach einem der Ansprüche 1 - 6, dadurch gekennzeichnet, daß der drehbare Gehäuseteil der Handgriff (15) ist.

## Claims

1. Hand-held power tool, especially a hand-guided angle grinder having a power tool housing (10) which is divided into a motor casing (11) containing an electric drive, into a gear head (12) which is arranged at one end face of the motor casing (11) and has a projecting drive spindle (13) for a tool (14), and into a handgrip (15) which is arranged at the other end face of the motor casing (11) and has a switch bar (19) for switching the electric drive on and off, characterized in that either the handgrip (15) or the gear head (12) is in the form of a rotatable housing part (13) capable of rotation, relative to the motor casing (11), about the longitudinal axis of the latter, and in that the hand-held power tool is equipped with a manually actuable securing device (20) for securing the rotatable housing part in at least two different angular positions, the rotatable housing part being held for rotation and axial translation on a bearing stub (22) formed on the motor casing (11), while on the bearing stub (22) an annular groove (23) is provided which has at least two locking recesses (24) offset at identical rotational angles to one another and on the rotatable housing part at least one locking boss (26) is arranged, which projects into the annular groove (23) and which is so designed that it can positively engage axially in each of the locking recesses (24), and in that the securing device (20) has at least one manually actuable locking pin (28) which maintains a positive connection, made by axial engagement of the locking bosses (26) in the locking recesses (24), between the rotatable housing part and the motor casing (11), the locking pin (28) securing the locking bosses (26) in their engaged position.

2. Power tool according to Claim 1, characterized in that the bearing stub (22) is arranged at the end of a centring cone (21) on which the rotatable housing part takes up position, by means of a correspondingly shaped centring cone (27), in its axial translatory movement made for the purpose of making the positive connection.

3. Power tool according to Claim 1 or 2, characterized in that four locking recesses (24) all offset by 90° to one another in the peripheral direction, four locking bosses (26) all offset by 90° to one another in the peripheral direction, and two locking pins (28) are provided, in that the locking pins (28), lying diametrically opposite and extending on the bearing stub (22) transversely to the longitudinal axis of the latter, are held in the rotatable housing part, pass tangentially through the annular groove (23) and project laterally from the rotatable housing part, in that the diameter of the locking pins (28) is slightly smaller than the width of the annular groove (23), in that each locking pin (28) has a radial recess (33) whose radial depth is greater than the axial dimension of the locking bosses (26) and whose dimension in their longitudinal direction is greater than the dimension of the locking bosses (26) in the peripheral direction, and in that the recesses (33) in the locking pins (28) are arranged such that in an unlocking position of the locking pins (28) they can each be brought, by the turning of the rotatable housing part, into a position axially opposite a locking recess (24), and in a locking position of the locking pins (28) are at a distance from the locking recesses (24).

4. Power tool according to Claim 3, characterized in that the locking pins (28) are guided in the rotatable housing part for axial translation and rotational immovability and are held in the locking position by a return spring (32).

5. Power tool according to Claim 4, characterized in that the two locking pins (28) are rigidly connected to one another by means of a bow (29) which extends on the outside of the rotatable housing part and at a distance from the latter and which serves as a handle for actuating the locking pins (28).

6. Power tool according to Claim 3, characterized in that the locking pins (28) are held in the rotatable housing part for rotatational movement and immovability in their longitudinal direction.

7. Power tool according to one of Claims 1 to 6, characterized in that the rotatable housing part is the handgrip (15).

## Revendications

1. Outillage à main, en particulier meuleuse d'angle, dans lequel :
- le boîtier de machine (10), se compose d'un boîtier de moteur (11) qui contient le moteur électrique d'entraînement et sur une face frontale duquel est montée une tête d'entraînement (12) d'où dépasse un arbre d'entraînement (13) pouvant recevoir un outil (14) tandis que sur l'autre face frontale se trouve une poignée (15) équipée d'une barrette de commande (13) d'un contacteur marche-arrêt à l'entraînement électrique,
- la poignée (15) ou la tête d'entraînement (12) constitue une partie de boîtier (13) qui peut tourner par rapport au boîtier de moteur (11) autour de l'axe longitudinal de celui-ci,
- la machine est équipée d'un dispositif de blocage (20) à commande manuelle, permettant de bloquer la partie tournante (13) du boîtier dans au moins deux positions différentes de rotation, cet outillage étant caractérisé en ce que :
- la partie tournante du boîtier est montée, avec possibilité de rotation et de coulissement axial, sur un palier tubulaire (22) moulé avec le boîtier de moteur (11),
- le palier (22) présente une rainure annulaire (23) comportant au moins deux encoches de verrouillage (24) à même décalage angulaire tandis que la partie tournante du boîtier comporte au moins un ergot de verrouillage (26) pénétrant dans la rainure annulaire (23) et dont la configuration est telle qu'il peut venir s'engager axialement dans chacune des encoches de verrouillage (24) avec verrouillage par combinaison par la forme,
- le dispositif de blocage (20) comporte au moins une broche de verrouillage (28), actionnable à la main, qui assure le maintien du verrouillage par combinaison par la forme établie entre la partie tournante du boîtier et le boîtier du moteur (11) par l'engagement des ergots (26) de verrouillage dans les encoches (24) de verrouillage, la broche (28) bloquant les ergots (26) en position engagée.

2. Outillage selon la revendication 1, caractérisé en ce que le palier tubulaire (22) se trouve à l'extrémité d'un cône de centrage (21) sur lequel vient s'appliquer, par l'intermédiaire d'un cône de centrage (27) correspondant, la partie tournante du boîtier lorsqu'elle coulisse axialement pour venir se verrouiller.

3. Outillage selon la revendication 1 ou 2, présentant les caractéristiques suivantes :
- il est prévu quatre encoches de verrouillage (24) espacées les unes des autres, périphériquement, de 90°, quatre ergots de verrouillage (24) espacés de même et deux broches de verrouillage (28),
- les broches de verrouillage (28) sont montées dans la partie tournante du boîtier, en position diamétralement opposées sur le palier tubulaire (22) et transversalement à son axe longitudinal, elles traversent tangentiellement la rainure annulaire (23) et dépassent latéralement la partie tournante du boîtier,
- les broches ont un diamètre un peu inférieur à la largeur de la rainure (23) et chacune d'elles porte un évidemment radial (33) dont la profondeur radiale est supérieure à la dimension axiale de l'ergot de verrouillage (26) et dont la dimension, selon la direction longitudinale de la broche, est supérieure à celle de l'ergot (26) en direction périphérique,
- les évidements (33) sont placés sur les broches (28) de manière qu'elles puissent, lorsque les broches sont en position de déverrouillage venir par rotation de la partie permanente du boîtier se placer chacune en face axialement d'une encoche de verrouillage (24), tandis qu'elles en sont écartées lorsque les broches (28) sont en position de verrouillage.

4. Outillage selon la revendication 3, caractérisé en ce que les broches de verrouillage (28) peuvent coulisser axialement, sans tourner, dans la partie tournante du boîtier et sont maintenues en position de verrouillage par un ressort de rappel (32).

5. Outillage selon la revendication 4, caractérisé en ce que les deux broches (28) sont, à l'extérieur de la partie tournante du boîtier et à une certaine distance de celle-ci, reliées rigidement par un étrier (29) servant d'organe de prise pour manoeuvrer les broches de verrouillage (28).

6. Outillage selon la revendication 3, caractérisé en ce que les broches de verrouillage (28) sont montées dans la partie tournante du boîtier de manière à pouvoir tourner mais sans coulisser sur elles-mêmes.

7. Outillage selon une des revendications 1 à 6, caractérisé en ce que la partie tournante du boîtier constitue la poignée (15).
